# EUROPEAN PATENT SPECIFICATION

(11) **EP 3 964 833 B1**
(45) Date of publication and mention of the grant of the patent: **13.03.2024**
(21) Application number: 21193876.6
(22) Date of filing: 30.08.2021
(51) Int. Cl.: G01N 30/12, G01N 1/02, G01N 1/08, G01N 1/22, B29C 45/76, G01N 1/28

(54) **THERMAL DESORPTION DEVICE AND METHOD**
VORRICHTUNG UND VERFAHREN ZUR THERMISCHEN DESORPTION
DISPOSITIF ET PROCÉDÉ DE DÉSORPTION THERMIQUE

(30) Priority: 04.09.2020 IT 202000021010
(43) Date of publication of application: 09.03.2022
(73) Proprietor: Piovan S.P.A., 30036 Santa Maria di Sala (VE) (IT)
(72) Inventor: BELLIO, Enrico, 31050 Ponzano V.to (TV) (IT); CAPPELLINI, Davide, 26029 Soncino (CR) (IT)
(74) Representative: Luppi Intellectual Property S.r.l.

(56) References cited:
- WO-A2-03/083468
- US-A- 4 976 924
- US-A1- 2018 356 316
- US-A1- 2019 025 263

## Description

### Background of the invention

The invention relates to a thermal desorption device and method, in particular for processing objects made of plastics, like, for example, preforms, polymer granules and/or polymer granules contained in glass vials, portions or samples of sheet or bottle, caps, etc.

Specifically, but not exclusively, the invention can be used in combination with an analyzer of chemical compounds, where the analyzer may comprise, for example, an analyzer of gas chromatographic type, or of the mass spectrometer type, or of the infrared type, or of yet another type, and where the chemical compounds may comprise, for example, hydrocarbons (benzene, limonene, etc), acetaldehyde and other low boiling and/or high boiling compounds. The invention may be applied, by way of non-limiting example, to determine the hydrocarbons contained in objects (for example preforms) made of terephthalate polyethylene (PET).

It is known that standard F2013-10 of ASTM International (American Society for Testing and Materials) indicates an analytical method to determine the hydrocarbons contained in preforms of terephthalate polyethylene (PET). This method provides a preliminary treatment that consists of freezing the preform with liquid nitrogen, grinding the preform with a mill and sifting the granules obtained to obtain a homogeneous granulate that is weighed and inserted into a glass vial. The vial is sealed and heated to a determined temperature for a set desorption time, in which the hydrocarbons are freed from the surface of the granules. The generated gas is transferred to a gas chromatographic column to measure the hydrocarbons and the measured datum is then correlated with the weight of the desorbed PET granulate (ppm or µg/g).

Nevertheless, this known method has some limits and drawbacks. Firstly, it is imprecise. It has in fact been found that the concentrations of hydrocarbons and/or of high and low boiling substances measured on preforms of PET and/or rPET, which are removed from the same production batch and sent to different laboratories, can have values that are very different from one another, with a margin of error above 30%. Further, the envisaged procedure makes it necessary to perform preliminary treatment of the preforms that makes the analysis method relatively complicated, costly and subject to imprecisions.

Patent publications US 2018/0299415 A1 and US 2018/0337029 A1 show two embodiments of thermal desorption devices that are usable to detect at least one substance of interest in a sample.

US 4 976 924 discloses a thermal desorption unit into which a magazine containing mini-tubes can be placed. Each mini-tube is selectively withdrawn automatically from the magazine, the sample of gas is taken from the mini-tube by heating, the mini-tube is flushed with heated air to cleanse the absorption material within the mini-tube and the inner walls of the tube, and the tube replaced within the magazine. The desorption unit is automated so that it is merely necessary to place the magazine within the unit, activate the unit and it will then proceed to retrieve every mini-tube sample, have each sample analyzed and eventually switch itself off when all of the samples have been retrieved and analysed leaving a full magazine with completely clean mini-tubes therein.

### Summary of the invention

One object of the invention is to obviate one or more of the aforesaid limits and drawbacks of the prior art.

One object of the invention is to provide an alternative device and/or method for the thermal desorption of objects.

One advantage of the invention is to permit easy and practical use of an outer thermal desorber that can be sized in an appropriate manner and be characterized by the specific type of analysis to be conducted.

One advantage is to analyze the hydrocarbons desorbed from a preform made of plastics, in particular of terephthalate polyethylene, without the need to perform preliminary treatments on the preform.

One advantage is to make significantly easier and faster the process for obtaining desorption for a greater quantity of objects.

In one aspect of the invention, there is provided a thermal desorption device as defined in claim 1.

In another aspect of the invention, there is provided a method of thermal desorption as defined in claim 14.

### Brief description of the drawings

The invention can be better understood and implemented with reference to the attached drawings that illustrate an embodiment thereof by way of non-limiting example, in which:

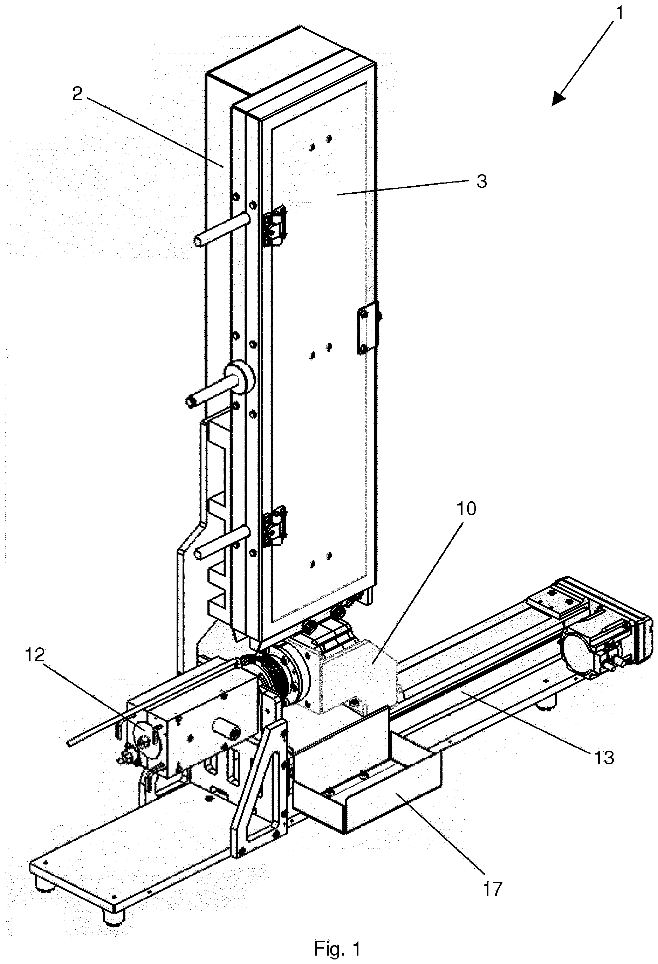

Figure 1 is a perspective view of a thermal desorption device made according to the present invention;

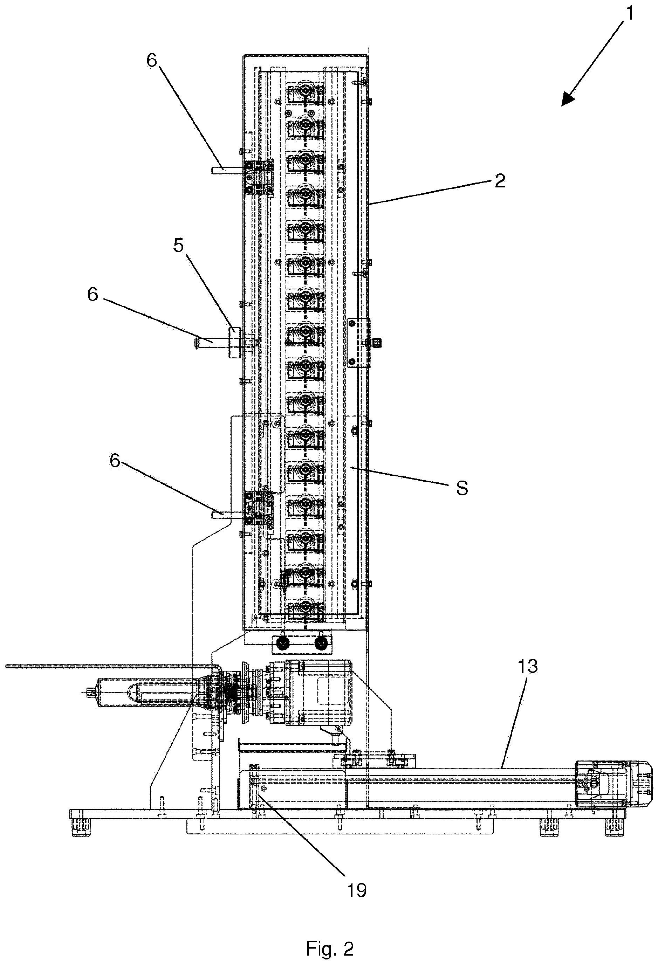

Figure 2 is a vertical raised frontal view of the device in Figure 1;

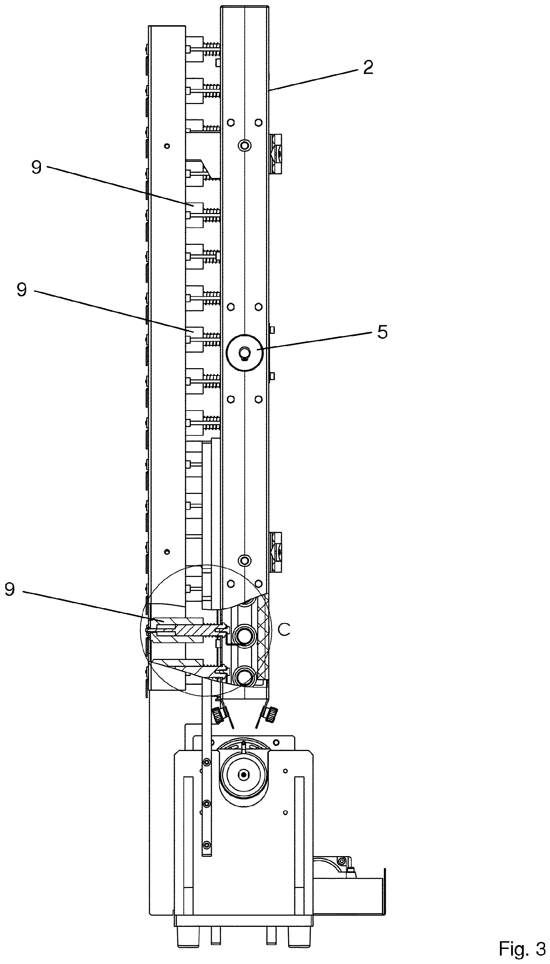

Figure 3 is a partially sectioned side view from the left of Figure 2;

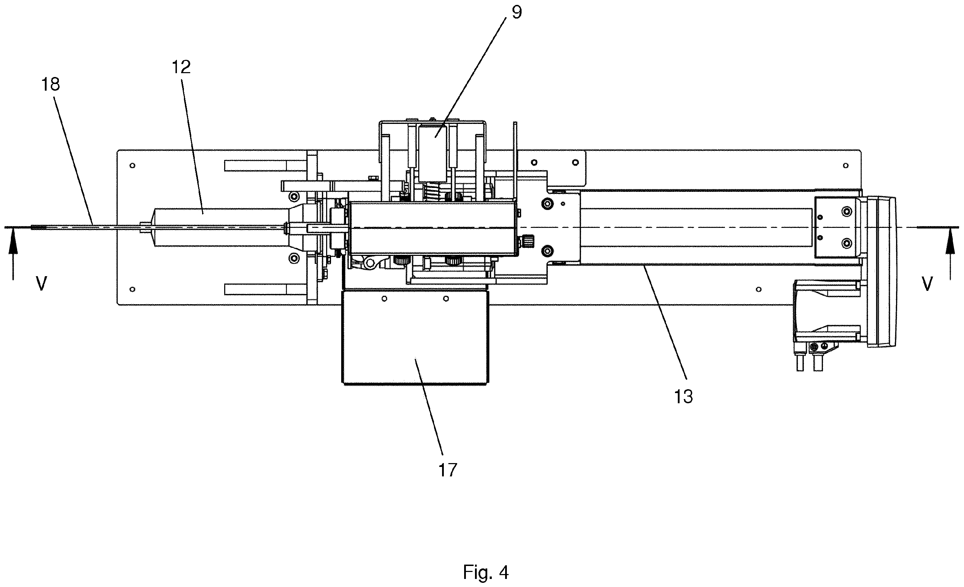

Figure 4 is a top plan view of Figure 2;

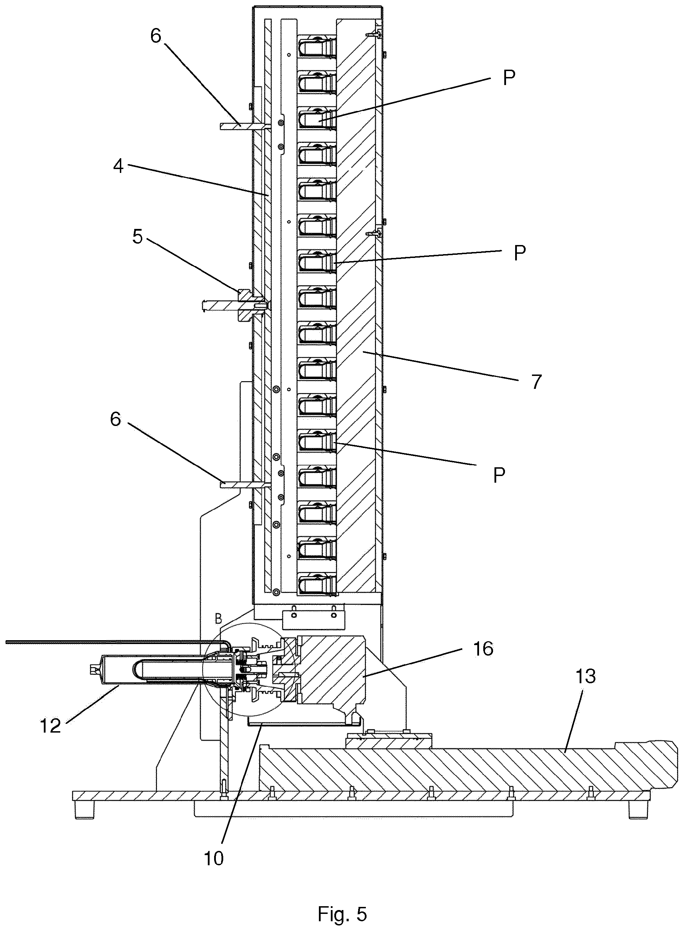

Figure 5 is the section V-V of Figure 4;

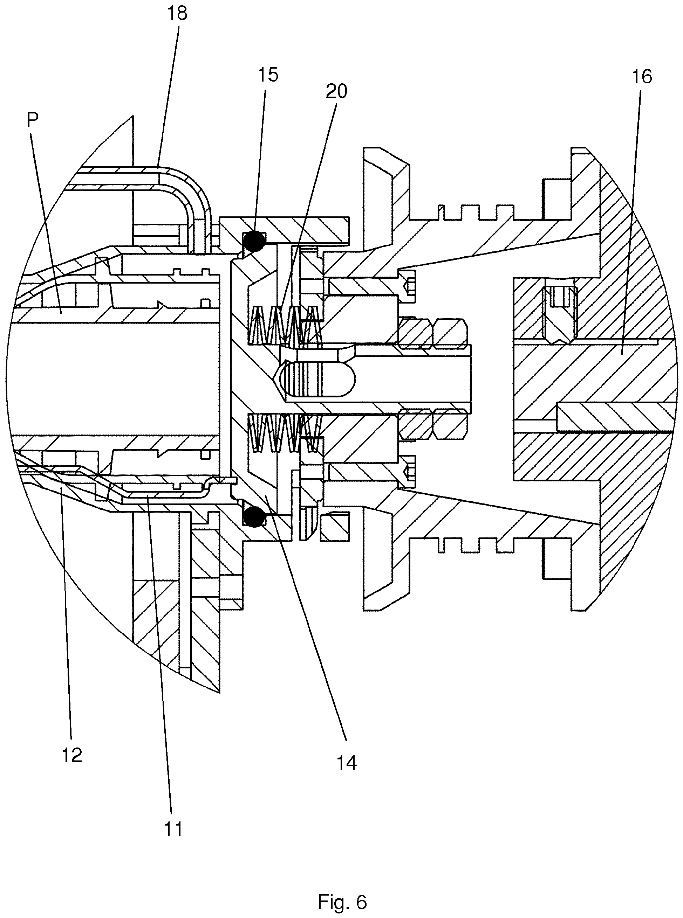

Figure 6 is the enlarged detail B of Figure 5;

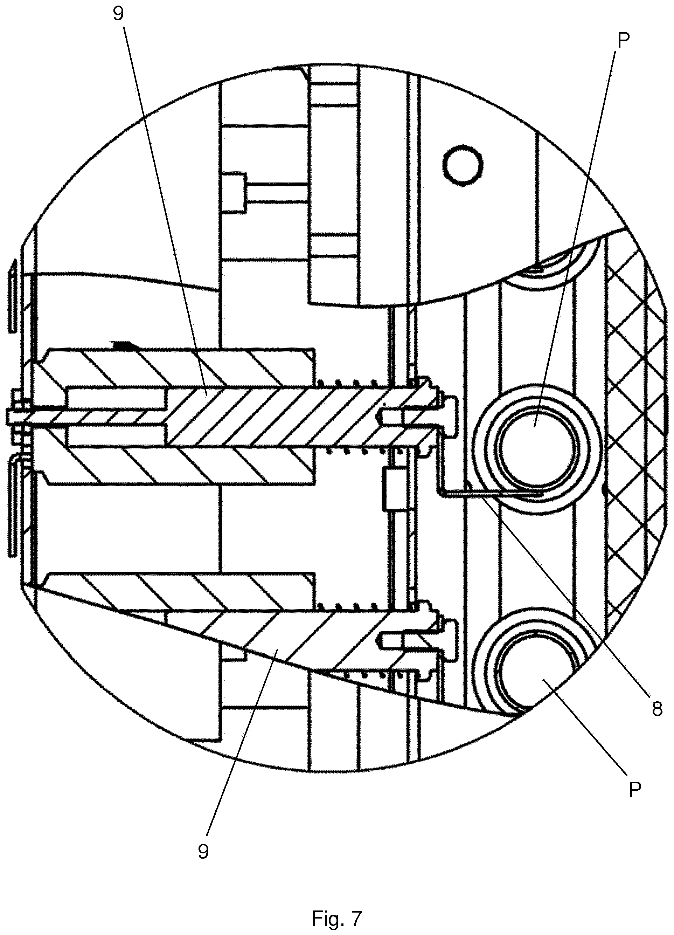

Figure 7 is the enlarged detail C of Figure 3;

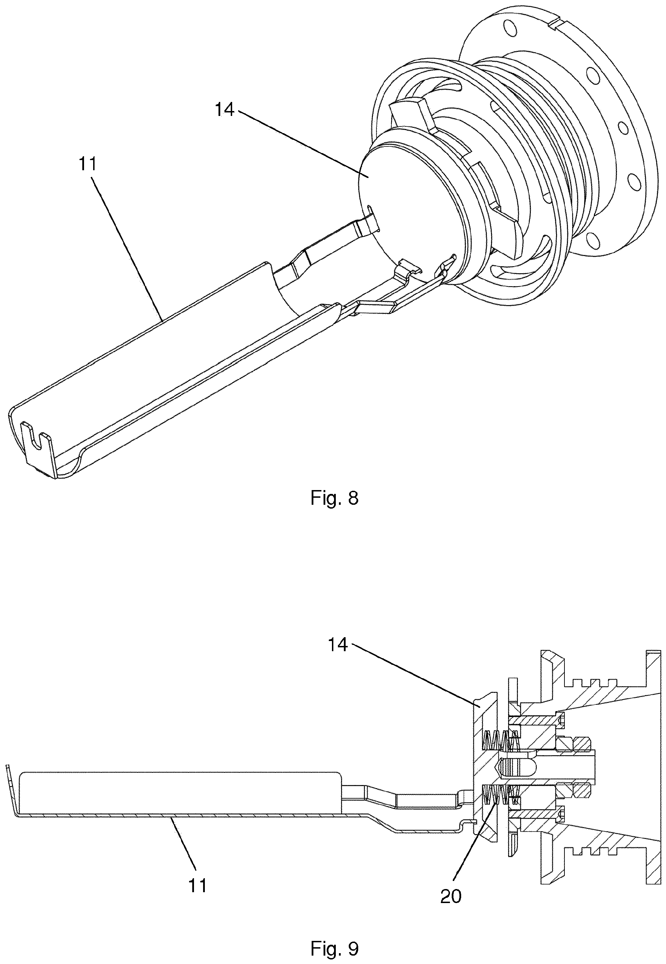

Figure 8 is a perspective view of a detail of the device of Figure 1 that includes the support that carries an object to be analyzed and the closing means that closes the desorber hermetically;
Figure 9 is a longitudinal section of the detail of Figure 8;

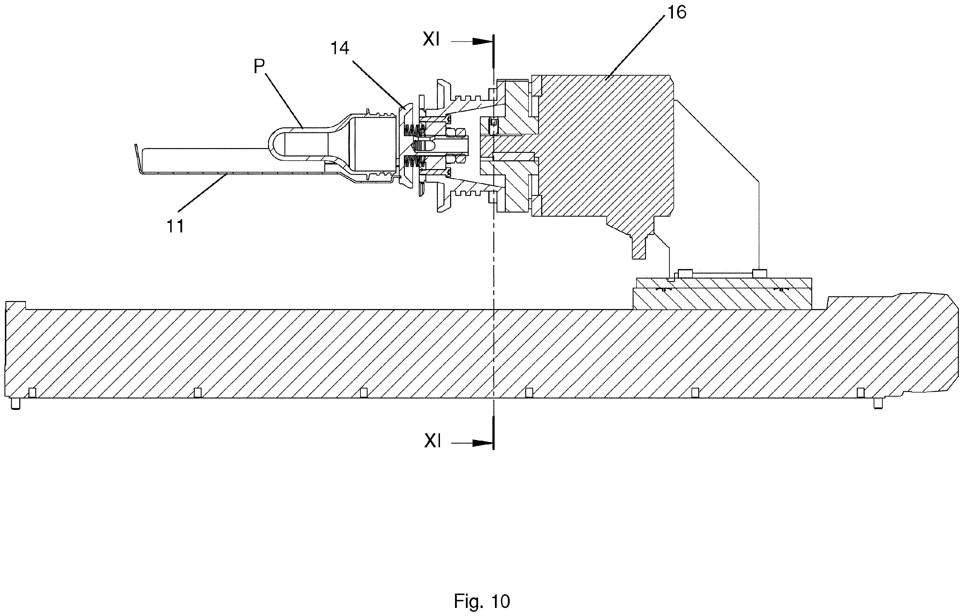

Figure 10 is a vertical section of a detail of the device of Figure 1 that includes the movable shuttle that conveys an object to be analyzed;

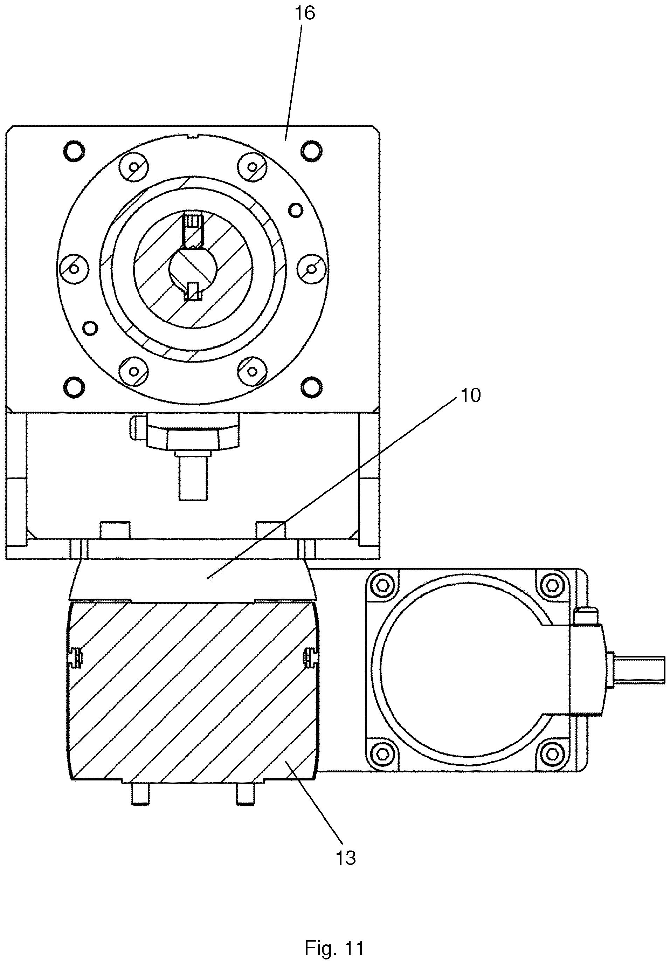

Figure 11 is the section XI-XI of Figure 10;

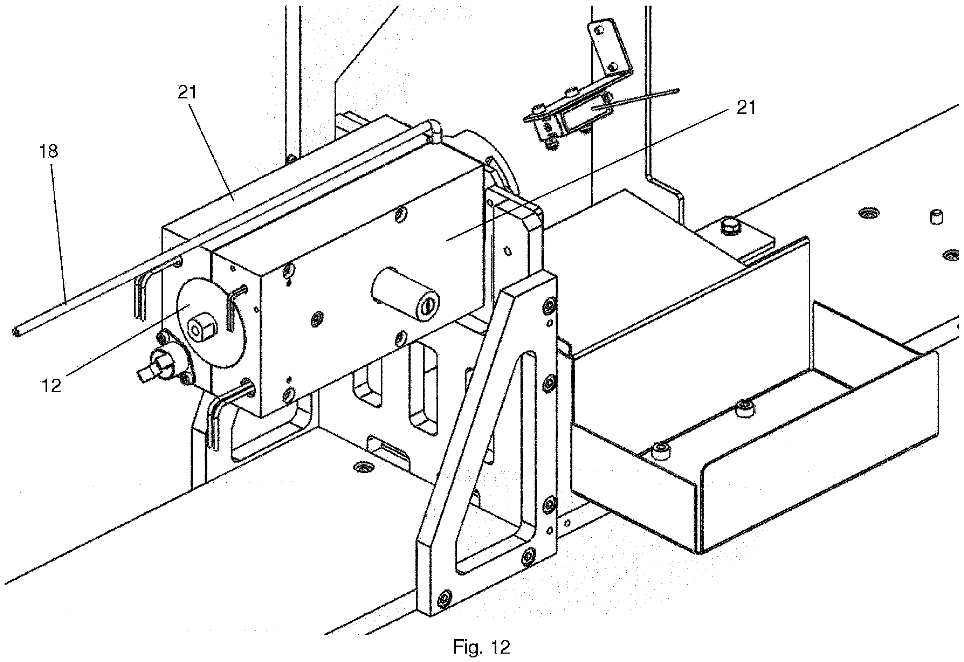

Figure 12 is a perspective view of a detail of the device of Figure 1 that includes the heating means of the thermal desorber;

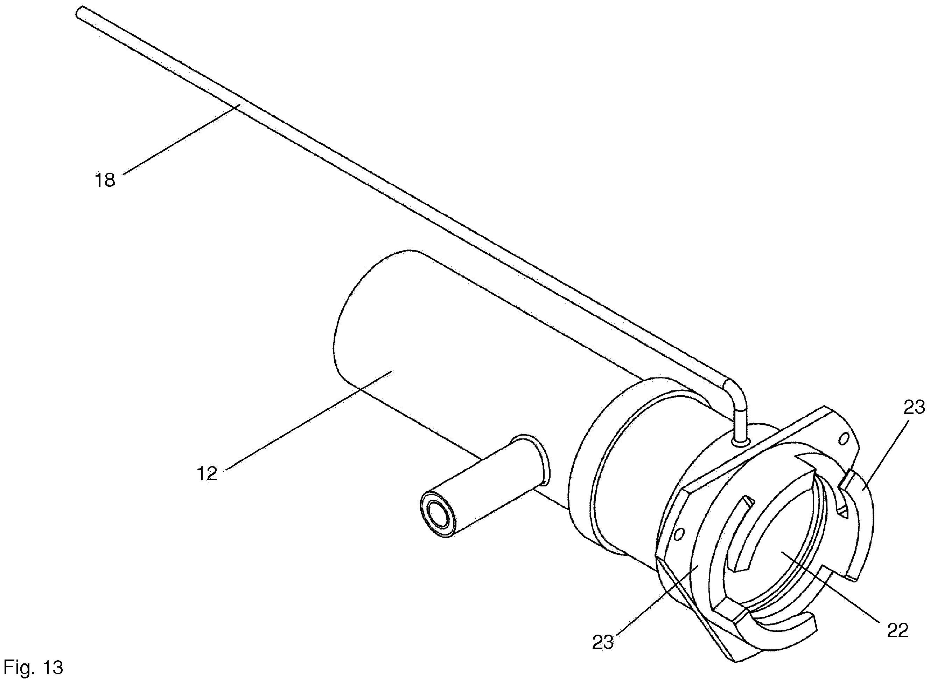

Figure 13 is a perspective view of the thermal desorber used in the device of Figure 1, without the heating means;

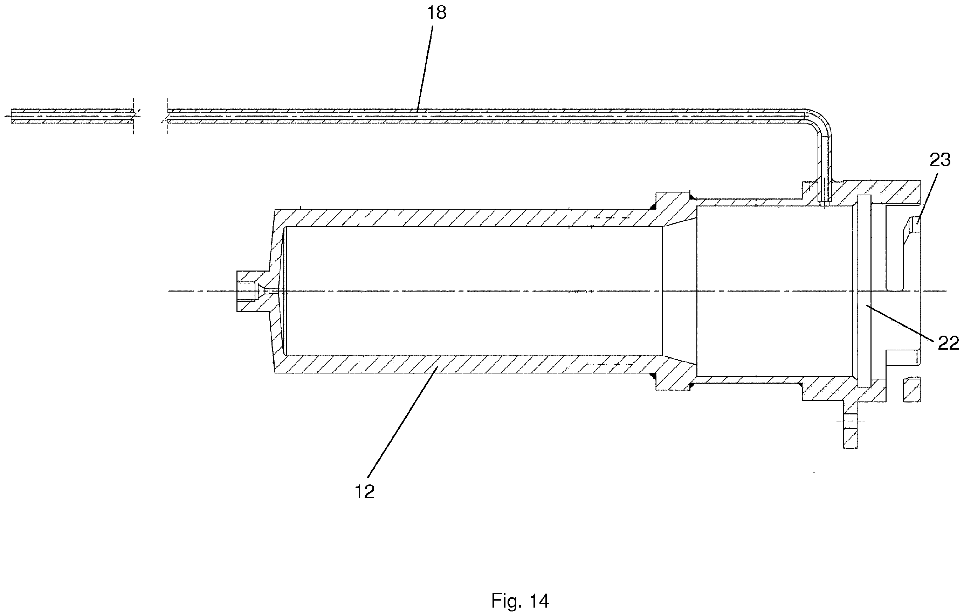

Figure 14 is a longitudinal section of the desorber of Figure 13.

### Detailed description

With 1, overall a thermal desorption device has been indicated, which is usable in particular for processing objects made of plastics, like, for example, preforms, caps, polymer granules and/or polymer granules contained in glass vials, portions or samples of sheet or bottle, etc. The desorption device 1 may be used, in particular, combined with an analyzer of chemical compounds, like, for example, a gas chromatographic, or a mass spectrometer, or infrared etc analyzer. The analyzer may be configured, in particular, to determine the concentration of chemical compounds such as, for example, hydrocarbons (benzene, limonene, etc), acetaldehyde and other volatile compounds (low boiling and/or high boiling). In the specific example, the desorption device 1 may be applied to desorb, and thus enable the hydrocarbons contained in objects (for example preforms) made of terephthalate polyethylene (PET) to be analyzed.

The thermal desorption device 1 may comprise, in particular, at least one magazine 2 configured to contain two or more objects P and provided with at least one (lower) outlet for ejecting the objects. The objects P may comprise, in particular, preforms intended for forming (for example by blowing) or containers (vials) that contain a certain quantity of incoherent plastics to be analyzed (for example polymer granules and/or polymer granules contained in glass vials, fragments or portions of samples, etc).

The magazine 2 may be configured, in particular, to contain the objects P vertically above one another. The magazine 2 may comprise, in particular, at least one door 3 to access an inner chamber containing the objects. The door 3 may be, as in this embodiment, arranged on a front side of the magazine 2. The door 3 may be, in particular, at least partially transparent (for example be made of Plexiglass) to enable an operator to verify visually the inside of the magazine 2.

The magazine 2 may comprise, in particular, a vertical wall 4 that is adjustable in position in a horizontal direction to adapt a dimension of the chamber containing the objects on the basis of a length of the objects P. The wall 4 is adjustable in position by an adjusting system 5 (for example of the screw type, in particular with an adjusting ring nut), in particular drivable by hand by an operator. The wall 4 may be movable horizontally by guide means 6, in particular of the rectilinear sliding type.

The magazine 2 may comprise, in particular, a reduction gear 7, to bound smaller objects, extending vertically, for example in the form of a removable lock, configured to reduce a dimension of the chamber containing the objects in a horizontal direction. The reduction gear 7 is inserted or not inserted into the chamber containing the objects on the basis of a length of the objects, i.e. it is arranged when the objects to be processed are of a relatively reduced length and the reduction gear 7 is removed when the objects to be processed are of a relatively great length.

The magazine 2 may comprise, in particular, two or more support elements 8, each of which is configured to supportingly receive an object.

The magazine 2 may comprise, in particular, at least one presence sensor S of the object in at least one support element 8.

The thermal desorption device 1 comprises ejection means 9 configured to eject the objects one at a time from the magazine 2 through the outlet. The ejection means 9 may be configured, in particular, to eject from the magazine 2 each time the object arranged further below.

The ejection means 9 may comprise, in particular, two or more actuators, in which each actuator (for example a solenoid actuator) is configured to move a respective support element 8, i.e. to retract the respective support element 8 such that the object, first supported by the support element 8, is left free to drop by the force of gravity, through the effect of the retraction of the support element 8 on the underlying support element 8. The ejection means 9 can act sequentially from bottom to top (one actuator at a time) such that the underlying support element 8 is free of the object.

The thermal desorption device 1 comprises at least one shuttle 10 with at least one support 11 configured to receive an object.

The object arranged lower in the magazine 2, through the effect of the retraction of the respective support element 8, will be left free to fall by gravity onto the support 11 carried by the shuttle 10 arranged in a receiving position.

The shuttle 10 is moveable between at least the aforesaid receiving position, in which the shuttle 10 receives an object ejected from the magazine 2, and at least one desorption position, in which the object that has been received from the shuttle 10 is positioned by the shuttle in a thermal desorber 12 where the substances adsorbed on the object can be freed to then be analyzed, in particular by the transfer of the gas generated during desorption to an outer analyzer (not illustrated, for example of known type).

The thermal desorber 12 may be, in particular, installed on a frame of the device 1 interchangeably. On the device 1, it is in particular possible to install selectively, one at a time, a plurality of thermal desorbers of different types.

The installed thermal desorber 12 may be characterized, by way of merely illustrative and non-limiting example, by desired dimensions and/or desired shape and/or ability to generate a desired thermal profile, on the basis of the type of finished product and/or of the shape (sometimes irregular) of the product to be analyzed and/or (granular) incoherent format of the product to be analyzed, etc.

The thermal desorber 12 may comprise, in particular, heating means 21, for example heating means with one or more electrical resistances (for example cartridge resistances). The heating means may be configured to obtain a determined heating profile of the object/s to be processed.

The thermal desorber 12 may comprise, in particular, an (electronic and programmable) control system to obtain a desired thermal profile of the object/s to be processed, to ensure suitable heating and heat exchange between the surface of the object/s and the inner walls of the desorber.

The thermal desorption device 1 comprises first actuator means 13 to move the shuttle 10 between the receiving position and the desorption position. The first actuator means 13 may comprise, in particular, at least one linear actuator. The first actuator means 13 may comprise, as in this embodiment, actuator means of pneumatic type. The first actuator means 13 may comprise, in other embodiments, actuator means of another type, for example electric, electromagnetic, hydraulic, etc.

The thermal desorber 12 comprises at least one opening 22 to receive the object carried by the shuttle 10 to the desorption position.

The thermal desorption device 1 comprises closing means 14 configured to adopt at least one first position, in which it closes hermetically the opening 22 of the thermal desorber 12 during desorption, and at least one second position, in which it does not close the desorber hermetically. In particular, the closing means 14 may be carried by the shuttle.

The closing means 14 may comprise, in particular, at least one cap openable and closable by rotations on itself, around its own axis. The closing means 14 may comprise, in particular, a closure with a bayonet fitting element (as in the specific example illustrated), couplable with a corresponding fitting element 23 arranged on the thermal desorber 12. The closure may comprise a system of another type, for example with a screw closure, or with a closure of yet another type. The movement between the first position and the second position may comprise, in particular, a rotation of the closing means 14 (cap) around its axis.

The closing means 14 may comprise, as in this embodiment, a fixed portion and a movable portion, in which the movable portion can rotate and, through the effect of the rotation (for example a rotation of about 90°, as in the specific example), be taken into sealing contact with the fixed portion (for example with an annular seal 15 interposed between the two portions). The closing means 14 may comprise, in particular, elastic means 20 (for example a spring) arranged for exerting an (axial) elastic force on the movable portion, to maintain the movable portion in sealing contact with the fixed portion.

The thermal desorption device 1 may comprise, in particular, second actuator means 16 to move the closing means 14 between the first position and the second position. In particular, the second actuator means 16 may be carried by the shuttle 10. The second actuator means 16 may comprise, in particular, a step motor. The second actuator means 16 may comprise, in particular, a rotor that is coaxial around an axis of the closing means 14 and/or coaxial with an axis of the cell of the thermal desorber 12 that contains the object to be processed.

The support 11 may be movable, as in this embodiment, with the possibility of adopting a support configuration, in which the support 11 receives an object P, and a release configuration, in which the support 11 leaves the object P free to fall by gravity.

The thermal desorption device 1 may comprise, in particular, a collection zone 17 arranged for receiving the objects P released by the support 11 when the shuttle 10 is arranged in a release position, which may coincide, as in this embodiment, with the receiving position.

The support 11 may be susceptible, in particular, of performing a rotation around a rotation axis (for example horizontal and/or parallel to a linear movement axis of the shuttle 10 and/or parallel to a longitudinal axis of the thermal desorber 12) between the support configuration and the release configuration.

The support 11 and the closing means 14 may be, in particular, integrally in rotation between one another. The aforesaid rotation may be, as in this embodiment, driven by the second actuator means 16 configured to rotate the closing means 14 around the rotation axis between the first position and the second position. The second actuator means 16 may be carried by the shuttle 10. The rotation of the support 11 to the release position may be, in particular, in an opposite direction to the rotation of the closing means 14 from the second position to the first position (closing rotation to make a seal), i.e. with the same rotation direction as the closing means 14 from the first position to the second position (opening rotation). The aforesaid rotation axis may be, as in this specific example, arranged horizontal.

The thermal desorption device 1 may comprise, in particular, a transfer line 18 (for example heat-controlled) to transfer the desorbed substances contained in the thermal desorber 12 to an outer analyzer (not illustrated).

The thermal desorption device 1 may comprise, in particular, electronic calculating means configured to receive at least one value relating to the overall outer surface of the object P (for example the outer surface of the preform) and at least one value, measured by the analyzer of the gas sample transferred from the thermal desorber 12, relating to a quantity or a percentage of substances freed by the object during desorption. The electronic calculating means may be configured, in particular, to determine a parameter, indicative of the degree of contamination of the sample object P, on the basis of a ratio between the value measured by the analyzer (for example the quantity of benzene and/or limonene and/or acetaldehyde detected in the desorbed gas) and the outer surface of the processed object.

The operation of the thermal desorption device 1 may perform, in particular, a method of thermal desorption that comprises the step of arranging a plurality of objects P in a magazine 2.

The method of thermal desorption comprises the step of ejecting the objects P from the magazine 2 one at a time.

The method of thermal desorption comprises the step of arranging the object P ejected from the magazine 2 onto a shuttle 10 arranged in a receiving position. The method of thermal desorption comprises the step of moving the shuttle 10 from the receiving position to a desorption position in which the object P carried by the shuttle 10 is inserted into a thermal desorber 12.

The method of thermal desorption comprises the step of closing hermetically the thermal desorber 12 by closing means 14.

The method of thermal desorption comprises the step of activating the thermal desorber 12 to liberate substances adsorbed on the object and then transfer the liberated substances to an analyzer.

The method of desorption comprises the step of opening the thermal desorber 12, once the step of thermal desorption has terminated, and of returning the shuttle 10 with the object to the receiving position, in which the processed object P can be released and in which a new object P can be ejected from the magazine 2 and thus arranged on the shuttle 10 for being processed with a new desorption cycle. The desorption cycles may be repeated until the objects are finished, after which it is possible to load new objects onto the magazine 2.

The object P may comprise, in particular, a body (in particular a monobloc body) with a defined shape, for example a preform. The thermal desorber 12 may comprise, in particular, a space containing the object with a volume that is less than twice the volume of the object.

The method in question may comprise, in particular, the steps of determining a quantity or percentage of substances desorbed from the object during desorption (where, in particular, the desorbed substances are determined by an analyzer), of determining an overall outer surface of the object (for example by calculating the outer geometric surface of the preform) and of evaluating a condition of the processed sample object P (for example a degree of contamination thereof) on the basis of a ratio between the aforesaid quantity or percentage of desorbed substances and the overall outer surface of the object.

The thermal desorption device 1 disclosed above enables a plurality of objects P (samples) to be analyzed to be sampled automatically. The objects P to be analyzed may comprise, in particular, preforms (preforms made of plastics intended for subsequent forming, for example by blowing), and/or the granulate, and/or the samples of previously cut bottles, and/or the samples of previously cut sheets, and/or caps for bottles, and/or closing caps for containers, and/or still other objects, generally made of plastics.

The preforms may be introduced directly into the magazine 2. For products in the form of granules or fragments or portions, it is possible to use vials or other containers suitable for containing the products. The preforms, vials or still other types of objects to be inserted into the magazine 2 are shaped so as to be insertable inside the volume of the thermal desorber 12.

In the specific example, the magazine 2 extends vertically and can contain up to sixteen objects P (preforms or vials). In other embodiments, the magazine may extend horizontally, or obliquely, and can contain a number of objects greater or less than sixteen.

The objects may be loaded into the magazine 2 manually by an operator, housing the objects (preforms or vials) through the (front) openable and closable door 3.

In this embodiment, the objects (preforms or vials) are housed above support elements 8 shaped and arranged so as to maintain the objects with the longitudinal axis thereof in the horizontal position. It is possible to provide other embodiments in which the support elements are shaped and arranged so as to maintain the objects with the longitudinal axis thereof in a vertical or oblique position, or in positions that differ from one object to another, for example with a star arrangement, or arranged on two or more (horizontal and/or vertical) rows, or with still other arrangements.

In this embodiment, the magazine 2 comprises ejection means 9 with actuators of electromagnetic type (solenoids) to retract the support elements 8 to enable the objects to fall and thus the support elements 8 to return to the advanced position to enable other objects to be supported that descend the magazine in sequence, one position at a time. In other embodiments that are not illustrated, it is possible to arrange actuators of another type (for example pneumatic, electric actuator, etc). The actuators, as said, make the ejection means 9 eject the objects from the magazine one at a time, from the bottom of the magazine, lowering the objects (preforms, vials, samples) sequentially, each time by one position, by dropping the objects onto the underlying support element 8 that has been left free, automatically inserting the object arranged lower in the object support 11 of the shuttle 10.

When the object falls into the shuttle 10, the first actuator means 13 (pneumatic cylinder) moves the shuttle 10 and thus pushes the object inside the cell of the thermal desorber 12, after which the second actuator means 16 (step motor or servo stepper motor) automatically drives the closing means 14 (cap) to close hermetically the cell and be able to start desorption.

Once thermal desorption has been completed, the sample gas generated in the cell, containing the desorbed substances, is transferred, through the heat-adjusted transfer line 18 to the analyzer, for example an analyzer for acetaldehyde and/or benzene and/or limonene and/or other hydrocarbons.

Once the time of transferring the sample gas has terminated, the closing means 14 (cap) of the thermal desorber 12 is automatically opened, the shuttle 10 moves and extracts the sample object processed outside from the cell of the thermal desorber 12, as far as a release position that may correspond, as in the specific embodiment, to the receiving position for receiving from the magazine 2. In the release position, the object holder support 11 drops the object, being driven to move from a support configuration to a release configuration, for example by a rotation (in particular overturning by about 180°) around a horizontal rotation axis, by driving the second actuator means 16 arranged for driving the closing means 14. The object falls from the support 11 (for example guided through a drive 19) into the collection zone 17.

Once the object has been unloaded, the support 11 of the shuttle 10 returns to the support configuration (for example by a rotation of 180°) ready to receive the subsequent object from the magazine 2.

The desorption device 1 comprises electronic and programmable control means, for controlling the various actuators of the device, which may comprise, in particular, a micro PLC or other type of electronic processor.

The closing means 14 may comprise closing means that is drivable with linear motion instead of rotational motion. In this specific example, the closing means 14 is moved between the first position and the second position by second actuator means 16 that is distinct from (and independent of) the first actuator means 13. It is possible in other embodiments that are not illustrated, for the closing means 14 to be moved between the first position and the second position by the first actuator means 13, for example if closing means is drivable with linear motion.

In this specific example, the closing means 14 (cap) of the cell of the thermal desorber 12 and the object holder support 11 arranged on the shuttle 10 are integrally rotatable with one another and are rotated by the same drive. In other embodiments, the closing means 14 and the object holder support 11 may be provided with drives that are independent of one another. In this embodiment, the second actuator means 14 (step motor) drives the closing means 14 in a rotation direction for sealing the cell of the thermal desorber 12, whilst in the opposite rotation direction it drives the opening of the closing means 14 and, with a further rotation, overturning of the support 11 and unloading of the object that falls from the support 11 of the shuttle 10 into the underlying collection zone 17.

It is possible for the objects loaded into the magazine 2 to be all of the same type, shape and dimensions so that the means of calculation may cause an indicative condition of the contamination of the samples by using a sole value of the surface that is the same for all the samples. Otherwise, if the samples loaded into the magazine 2 have outer surfaces with different areas, the calculating means may receive each time the respective value of the area of the surface, specific for a given sample, to perform the calculation.

As said, the thermal desorption device 1 is dedicated, in particular, to analyzing the hydrocarbons desorbed from preforms of terephthalate polyethylene (without performing preliminary treatments on the preform). It is nevertheless possible to provide a thermal desorption device that is suitable for other types of objects and for other types of substances to be desorbed and analyzed.

The thermal desorption device in question enables objects processed with a regular and constant surface, for example preforms, and to correlate the concentration value of the desorbed substances with the surface of the objects, so that the obtained results are significantly precise and reliable.

The thermal desorption device in question is so configured that on one side the object or sample to be processed and analyzed can be easily inserted into the heating and desorption cell, and, on the other hand, the dead volume inside the cell (i.e. the volume part of the cell that is not occupied by the object or sample) is relatively reduced, for example no greater than the volume of the object, so that the concentration of the desorbed gases (hydrocarbons) is hardly diluted in the cell, further increasing the precision and reliability of the analysis.

The dimensions of the cell of the thermal desorber 12 may be specific to the objects receivable from the magazine 2, although it is possible to use cells with variable volume or interchangeable cells according to the volume of the objects to be processed.

The thermal desorber 12 may comprise, in particular, an insulated cell (for example made of aluminum) with heating means (for example of the electrical resistance type) controlled to maintain a desired temperature in the cell. The temperature may be detected with temperature sensor means connected to a thermostat.

The thermal desorber 12 may work, for example at temperatures comprised between 50 °C and 300 °C, with the possibility of making set temperature ramps through the electronic control means.

In this embodiment, the cell of the thermal desorber 12 comprises a cavity to insert a single PET preform. In other embodiments, it is possible to provide cells configured to receive other types of samples to be processed and analyzed. The cavity may have dimensions that are such as to receive relatively small preforms, for example preforms of small bottles and bottles made of PET, or greater dimensions to receive greater preforms, for example preforms of PET quart bottles. It is possible to provide a thermal desorber provided with several cavities, each of which makes a desorption cell, sized to receive objects of different volumes, in particular in such a manner that the dead volume in each desorption cell is relatively reduced.

The cell may be provided, in particular, with a discharge hole for discharging the gases. The discharge hole may be, in particular, connected to a transfer line 18, (in particular made of metal, for example steel) and/or to normally closed valve means (for example a solenoid valve). During the step of thermal desorption, the temperature in the cell increases and overpressure is generated. After the step of thermal desorption finishes, the control means opens the valve means and the overpressure ejects the sample gas through the transfer line 18. It is possible to provide a thermal desorber with a second hole and a second pipe with normally closed second valve means (solenoid valve), controlled so as to insert an extra clean pressurized gas so that the sample gas with the desorbed substances contained in the cell is pushed out of the cell by the ultra clean gas through the transfer line 18. The transfer line 18 of the sample gas may be, in particular, thermoregulated to avoid condensation problems.

It has been found that, by performing the analysis on preforms belonging to the same production batch, using thermal desorption devices like the one in question, the concentration levels of hydrocarbons (for example acetaldehyde) detected are very close together, with an error of about 3%.

## Claims

1. Thermal desorption device (1), comprising:
- at least one magazine (2) configured to contain two or more objects and provided with at least one outlet to eject the objects;
- ejection means (9) configured to eject the objects from said magazine (2) through said outlet;
- at least one shuttle (10) with at least one support (11) configured to receive at least one object, said shuttle (10) being movable between at least one receiving position, where said shuttle (10) receives an object ejected from said outlet, and at least one desorption position, where the object is in a thermal desorber (12);
- first actuator means (13) for moving said shuttle (10) between said receiving position and said desorption position;
**characterized by**
- a thermal desorber (12) with **an** opening (22) to receive the object carried by said shuttle (10) **through said opening (22);**
- closing means (14) carried by said shuttle (10) and configured to assume at least one first position, in which the closing means (14) seals said opening during desorption, and at least one second position.

2. Device according to claim 1, comprising second actuator means (16) carried by said shuttle (10) for moving said closing means (14) between said first position and said second position.

3. Device according to claim 1 or 2, wherein said magazine (2) is configured to contain the objects one above the other and said ejection means (9) is configured to eject the object placed further down; said magazine (2) comprising two or more support elements (8) each of which is configured to support an object.

4. Device according to claim 3, wherein said ejection means (9) comprises two or more actuators, each actuator being configured to move a respective support element (8) so that the object supported by a support element (8) is left free **to** fall on an underlying support element (8) and the object placed further down is left free to fall on said shuttle (10).

5. Device according to any one of the preceding claims, wherein said closing means (14) comprises at least one cap which can be closed and opened by means of a rotation and the movement between said first position and said second position comprises a rotation of said cap operated by second actuator means (16) carried by said shuttle (10).

6. Device according to any one of the preceding claims, wherein said support (11) is movable with the possibility of assuming a support configuration, in which it receives an object from above, and a release configuration, in which it leaves the object to fall downwards, said device comprising a collection area (17) arranged to collect the objects released from said support (11), in particular to collect the objects released when said shuttle (10) is arranged in said receiving position.

7. Device according to claim 6, wherein said support (11) is capable of performing a rotation around a rotation axis between said support configuration and said release configuration, said support (11) and said closing means (14 ) being integral in rotation and said rotation being operated by second actuator means (16) carried by said shuttle (10) and configured to rotate said closing means (14) about said rotation axis between said first position and said second position.

8. Device according to claim 7, wherein the rotation of said support (11) towards said release configuration is in the opposite direction with respect to the rotation of said closing means (14) towards said first position.

9. Device according to claim 7 or 8, wherein said rotation axis is horizontal.

10. Device according to any one of the preceding claims, wherein said magazine (2) is configured to contain the objects vertically one above the other and comprises at least one vertical wall (4) adjustable in a horizontal position to adapt a dimension of an object containment compartment based on the length of the objects themselves.

11. Device according to any one of the preceding claims, comprising electronic calculation means configured to receive data relating to the overall external surface of the object and to the quantity of substances desorbed by the object during desorption and to determine a condition of contamination of the object based on a ratio between said quantity and said surface.

12. Device according to any one of the preceding claims, wherein said thermal desorber (12) is provided with heating means (21).

13. Device according to any one of the preceding claims, wherein said thermal desorber (12) is installed on said device (1) in an interchangeable manner.

14. Method of thermal desorption, in particular a method that can be carried out using a device according to any one of the preceding claims, said method comprising the steps of:
- arranging a plurality of objects in a magazine (2);
- ejecting an object from said magazine (2);
- arranging the object ejected from said magazine (2) on a shuttle (10) situated in a receiving position;
- moving said shuttle (10) from said receiving position to a desorption position in which the object carried by said shuttle (10) is inserted through an opening (22) in a cell of a thermal desorber (12);
- sealing said opening (22) by means of closing means (14);
- activating said thermal desorber (12) to release substances adsorbed on said object, and then transferring the released substances to an analyzer;
- once desorption is ended, opening said opening (22) and returning said shuttle (10) to said receiving position where the processed object is released and a new object is ejected from said magazine (2) and placed on said shuttle (10) to be processed.

15. Method according to claim 14, wherein said object comprises a body with a defined shape, for example a preform, wherein said thermal desorber (12) comprises a containment space for said object with a volume less than twice the volume of said object, and wherein said method comprises the steps of determining a quantity of substances released from said object during desorption by means of an analyzer, of determining an overall outer surface of said object and of evaluating a condition of contamination by said substances on the basis of a ratio between said quantity and said outer surface.

## Patentansprüche

1. Thermische Desorptionsvorrichtung (1), die umfasst:
- mindestens ein Magazin (2), das so eingerichtet ist, dass es zwei oder mehr Objekte enthält, und mit mindestens einem Auslass versehen ist, um die Objekte auszuwerfen;
- eine Auswurfeinrichtung (9), die dazu eingerichtet ist, die Objekte aus dem Magazin (2) durch den Auslass auszuwerfen;
- mindestens einen Schlitten (10) mit mindestens einem Träger (11), der dazu eingerichtet ist, mindestens ein Objekt aufzunehmen, wobei der Schlitten (10) zwischen mindestens einer Aufnahmeposition, in der der Schlitten (10) ein Objekt aufnimmt, das aus dem Auslass ausgeworfen wird, und mindestens einer Desorptionsposition, in der sich das Objekt in einem thermischen Desorber (12) befindet, beweglich ist;
- eine erste Aktuatoreinrichtung (13) zum Bewegen des Schlittens (10) zwischen der Aufnahmeposition und der Desorptionsposition; **gekennzeichnet durch**
- einen thermischen Desorber (12) mit einer Öffnung (22), um das durch den Schlitten (10) getragene Objekt durch die Öffnung (22) aufzunehmen;
- eine Schließeinrichtung (14), die durch den Schlitten (10) getragen wird und dazu eingerichtet ist, mindestens eine erste Position, in der die Schließeinrichtung (14) die Öffnung während der Desorption abdichtet, und mindestens eine zweite Position anzunehmen.

2. Vorrichtung nach Anspruch 1, die eine zweite Aktuatoreinrichtung (16), die durch den Schlitten (10) getragen wird, zum Bewegen der Schließeinrichtung (14) zwischen der ersten Position und der zweiten Position umfasst.

3. Vorrichtung nach Anspruch 1 oder 2, wobei das Magazin (2) so eingerichtet ist, dass es die Objekte übereinander enthält, und die Auswurfeinrichtung (9) dazu eingerichtet ist, das Objekt, das weiter unten angeordnet ist, auszuwerfen; wobei das Magazin (2) zwei oder mehr Trägerelemente (8) umfasst, von denen jedes dazu eingerichtet ist, ein Objekt zu tragen.

4. Vorrichtung nach Anspruch 3, wobei die Auswurfeinrichtung (9) zwei oder mehr Aktuatoren umfasst, wobei jeder Aktuator dazu eingerichtet ist, ein jeweiliges Trägerelement (8) so zu bewegen, dass das durch ein Trägerelement (8) getragene Objekt frei auf ein darunterliegendes Trägerelement (8) fallen gelassen wird und das weiter unten angeordnete Objekt frei auf den Schlitten (10) fallen gelassen wird.

5. Vorrichtung nach einem der vorangehenden Ansprüche, wobei die Schließeinrichtung (14) mindestens eine Kappe umfasst, die mittels einer Drehung geschlossen und geöffnet werden kann, und die Bewegung zwischen der ersten Position und der zweiten Position eine Drehung der Kappe umfasst, die durch die zweite Aktuatoreinrichtung (16) betätigt wird, die durch den Schlitten (10) getragen wird.

6. Vorrichtung nach einem der vorangehenden Ansprüche, wobei der Träger (11) mit der Möglichkeit der Annahme einer Tragekonfiguration, in der er ein Objekt von oben aufnimmt, und einer Lösekonfiguration, in der er das Objekt nach unten fallen lässt, beweglich ist, wobei die Vorrichtung einen Auffangbereich (17) umfasst, der angeordnet ist, um die vom Träger (11) gelösten Objekte aufzufangen, insbesondere die Objekte aufzufangen, die gelöst werden, wenn der Schlitten (10) in der Aufnahmeposition angeordnet ist.

7. Vorrichtung nach Anspruch 6, wobei der Träger (11) in der Lage ist, eine Drehung um eine Drehachse zwischen der Tragekonfiguration und der Lösekonfiguration durchzuführen, wobei der Träger (11) und die Schließeinrichtung (14) in der Drehung integral sind und die Drehung durch die zweite Aktuatoreinrichtung (16) betätigt wird, die durch den Schlitten (10) getragen wird, und dazu eingerichtet ist, die Schließeinrichtung (14) um die Drehachse zwischen der ersten Position und der zweiten Position zu drehen.

8. Vorrichtung nach Anspruch 7, wobei die Drehung des Trägers (11) in Richtung der Lösekonfiguration in der entgegengesetzten Richtung mit Bezug auf die Drehung der Schließeinrichtung (14) in Richtung der ersten Position stattfindet.

9. Vorrichtung nach Anspruch 7 oder 8, wobei die Drehachse horizontal ist.

10. Vorrichtung nach einem der vorangehenden Ansprüche, wobei das Magazin (2) so eingerichtet ist, dass es Objekte vertikal übereinander enthält und mindestens eine vertikale Wand (4) umfasst, die in einer horizontalen Position einstellbar ist, um eine Abmessung eines Objekteingrenzungsfachs auf der Basis der Länge der Objekte selbst anzupassen.

11. Vorrichtung nach einem der vorangehenden Ansprüche, die eine elektronische Recheneinrichtung umfasst, die dazu eingerichtet ist, Daten in Bezug auf die gesamte äußere Oberfläche des Objekts und auf die Menge an Substanzen, die durch das Objekt während der Desorption desorbiert werden, zu empfangen und einen Verunreinigungszustand des Objekts auf der Basis eines Verhältnisses zwischen der Menge und der Oberfläche zu bestimmen.

12. Vorrichtung nach einem der vorangehenden Ansprüche, wobei der thermische Desorber (12) mit einer Heizeinrichtung (21) versehen ist.

13. Vorrichtung nach einem der vorangehenden Ansprüche, wobei der thermische Desorber (12) an der Vorrichtung (1) in einer austauschbaren Weise installiert ist.

14. Verfahren zur thermischen Desorption, insbesondere Verfahren, das unter Verwendung einer Vorrichtung nach einem der vorangehenden Ansprüche ausgeführt werden kann, wobei das Verfahren die Schritte umfasst:
- Anordnen einer Vielzahl von Objekten in einem Magazin (2);
- Auswerfen eines Objekts aus dem Magazin (2);
- Anordnen des aus dem Magazin (2) ausgeworfenen Objekts auf einem Schlitten (10), der sich in einer Aufnahmeposition befindet;
- Bewegen des Schlittens (10) von der Aufnahmeposition in eine Desorptionsposition, in der das durch den Schlitten (10) getragene Objekt durch eine Öffnung (22) in einer Zelle eines thermischen Desorbers (12) eingesetzt wird;
- Abdichten der Öffnung (22) mittels der Schließeinrichtung (14);
- Aktivieren des thermischen Desorbers (12), um Substanzen, die an dem Objekt adsorbiert sind, freizusetzen, und dann Überführen der freigesetzten Substanzen zu einem Analysator;
- sobald die Desorption beendet ist, Öffnen der Öffnung (22) und Zurückführen des Schlittens (10) in die Aufnahmeposition, in der das bearbeitete Objekt gelöst wird und ein neues Objekt aus dem Magazin (2) ausgeworfen und auf dem Schlitten (10) angeordnet wird, damit es bearbeitet wird.

15. Verfahren nach Anspruch 14, wobei das Objekt einen Körper mit einer definierten Gestalt, beispielsweise eine Vorform, umfasst, wobei der thermische Desorber (12) einen Eingrenzungsraum für das Objekt mit einem Volumen, das geringer ist als zweimal das Volumen des Objekts, umfasst, und wobei das Verfahren die Schritte des Bestimmens einer Menge von Substanzen, die von dem Objekt während der Desorption freigesetzt werden, mittels eines Analysators, des Bestimmens einer gesamten äußeren Oberfläche des Objekts und des Bewertens eines Zustandes einer Verunreinigung durch die Substanzen auf der Basis eines Verhältnisses zwischen der Menge und der äußeren Oberfläche umfasst.

## Revendications

1. Dispositif de désorption thermique (1), comprenant :
- au moins un chargeur (2) configuré pour contenir deux objets ou plus et doté d'au moins une sortie pour éjecter les objets ;
- un moyen d'éjection (9) configuré pour éjecter les objets dudit chargeur (2) à travers ladite sortie ;
- au moins une navette (10) avec au moins un support (11) configurée pour recevoir au moins un objet, ladite navette (10) étant mobile entre au moins une position de réception, où ladite navette (10) reçoit un objet éjecté de ladite sortie, et au moins une position de désorption, où l'objet est dans un désorbeur thermique (12) ;
- un premier moyen d'actionnement (13) pour déplacer ladite navette (10) entre ladite position de réception et ladite position de désorption ;
**caractérisé par**
- un désorbeur thermique (12) avec une ouverture (22) pour
recevoir l'objet porté par ladite navette (10) à travers ladite ouverture (22) ;
- le moyen de fermeture (14) porté par ladite navette (10) et configuré pour prendre au moins une première position, dans laquelle le moyen de fermeture (14) scelle ladite ouverture pendant la désorption, et au moins une deuxième position.

2. Dispositif selon la revendication 1, comprenant un deuxième moyen d'actionnement (16) porté par ladite navette (10) pour déplacer ledit moyen de fermeture (14) entre ladite première position et ladite deuxième position.

3. Dispositif selon la revendication 1 ou 2, dans lequel ledit chargeur (2) est configuré pour contenir les objets l'un au-dessus de l'autre et ledit moyen d'éjection (9) est configuré pour éjecter l'objet placé plus bas ; ledit chargeur (2) comprenant deux éléments de support (8) ou plus, dont chacun est configuré pour supporter un objet.

4. Dispositif selon la revendication 3, dans lequel ledit moyen d'éjection (9) comprend deux actionneurs ou plus, chaque actionneur étant configuré pour déplacer un élément de support (8) respectif de sorte que l'objet supporté par un élément de support (8) soit laissé libre de tomber sur un
élément de support sous-jacent (8) et l'objet placé plus bas est laissé libre de tomber sur ladite navette (10) .

5. Dispositif selon l'une des revendications précédentes, dans lequel ledit moyen de fermeture (14) comprend au moins un capuchon qui peut être fermé et ouvert au moyen d'une rotation et le déplacement entre ladite première position et ladite deuxième position comprend une rotation dudit capuchon actionné par un deuxième moyen d'actionnement (16) porté par ladite navette (10).

6. Dispositif selon l'une des revendications précédentes, dans lequel ledit support (11) est mobile avec la possibilité de prendre une configuration de support, dans laquelle il reçoit un objet par le dessus, et une configuration de libération, dans laquelle il laisse tomber l'objet vers le bas, ledit dispositif comprenant une zone de collecte (17) agencée pour collecter les objets libérés dudit support (11), en particulier pour collecter les objets libérés lorsque ladite navette (10) est agencée dans ladite position de réception.

7. Dispositif selon la revendication 6, dans lequel ledit support (11) est capable d'effectuer une rotation autour d'un axe de rotation entre ladite configuration de support et ladite configuration de libération, ledit support (11) et ledit moyen de fermeture (14) étant solidaires en rotation et ladite rotation étant actionnée par un deuxième moyen d'actionnement (16) porté par ladite navette (10) et configuré pour faire tourner ledit moyen de fermeture (14) autour dudit axe de rotation entre ladite première position et ladite deuxième position.

8. Dispositif selon la revendication 7, dans lequel la rotation dudit support (11) vers ladite configuration de libération est dans la direction opposée par rapport à la rotation dudit moyen de fermeture (14) vers ladite première position.

9. Dispositif selon la revendication 7 ou 8, dans lequel l'axe de rotation est horizontal.

10. Dispositif selon l'une des revendications précédentes, dans lequel ledit chargeur (2) est configuré pour contenir les objets verticalement l'un au-dessus de l'autre et comprend au moins une paroi verticale (4) réglable en position horizontale pour adapter une dimension d'un compartiment de confinement d'objets en fonction de la longueur des objets eux-mêmes.

11. Dispositif selon l'une des revendications précédentes, comprenant un moyen de calcul électronique configuré pour recevoir des données relatives à la surface externe globale de l'objet et à la quantité de substances désorbées par l'objet lors de la désorption et pour déterminer un état de contamination de l'objet sur la base d'un rapport entre ladite quantité et ladite surface.

12. Dispositif selon l'une des revendications précédentes, dans lequel ledit désorbeur thermique (12) est doté d'un moyen de chauffage (21).

13. Dispositif selon l'une des revendications précédentes, dans lequel ledit désorbeur thermique (12) est installé sur ledit dispositif (1) de manière interchangeable.

14. Procédé de désorption thermique, en particulier un procédé pouvant être réalisé à l'aide d'un dispositif selon l'une des revendications précédentes, ledit procédé comprenant les étapes suivantes :
- l'agencement d'une pluralité d'objets dans un chargeur (2) ;
- l'éjection d'un objet dudit chargeur (2) ;
- l'agencement de l'objet éjecté dudit chargeur (2) sur une navette (10) située dans une position de réception ;
- le déplacement de ladite navette (10) de ladite position de réception vers une position de désorption dans laquelle l'objet porté par ladite navette (10) est inséré à travers une ouverture (22) dans une cellule d'un désorbeur thermique (12) ;
- le scellement de ladite ouverture (22) au moyen du moyen de fermeture (14) ;
- l'activation dudit désorbeur thermique (12) pour libérer des substances absorbées sur ledit objet, puis transfert des substances libérées vers un analyseur ;
- une fois la désorption terminée, l'ouverture de ladite ouverture (22) et le retour de ladite navette (10) dans ladite position de réception où l'objet traité est libéré et un nouvel objet est éjecté dudit chargeur (2) et placé sur ladite navette (10) à traiter.

15. Procédé selon la revendication 14, dans lequel ledit objet comprend un corps de forme définie, par exemple une préforme, dans lequel ledit désorbeur thermique (12) comprend un espace de confinement pour ledit objet d'un volume inférieur à deux fois le volume dudit objet, et dans lequel ledit procédé comprend les étapes de détermination d'une quantité de substances libérées dudit objet pendant la désorption au moyen d'un analyseur, de détermination d'une surface externe globale dudit objet et d'évaluation d'un état de contamination par lesdites substances sur la base d'un rapport entre ladite quantité et ladite surface externe.
